# EUROPEAN PATENT APPLICATION

(11) **EP 1 746 633 A2**
(43) Date of publication of application: **24.01.2007**
(21) Application number: 06117452.0
(22) Date of filing: 19.07.2006
(51) Int. Cl.: H01J 61/067, H01J 61/30

(54) **Surface light source device and backlight unit having the same**

(30) Priority: 19.07.2005 KR 20050065259; 06.07.2006 KR 20060063557
(71) Applicant: Samsung Corning Co., Ltd, Suwon-si, Gyeonggi-do 443-732 (KR)
(72) Inventor: Chun, Ho Young, Songpa-gu Seoul 138-802 (KR); Cho, Seok Hyun, Gwangijn-gu 143-769, Seoul (KR); Jung, Kyeong Taek, Gwonsun-gu, 441-885, Suwon-si (KR); Kim, Kil Ho Sannamusil-Geukdong Apt. 611-302, Gyeonggi-do 443-470 (KR); Kim, Geun Young, Jungnang-gu 131-231, Seoul (KR)
(74) Representative: Hengelhaupt, Jürgen

(57) **Abstract**

Provided are a surface light source device and a backlight unit having the same. The surface light source device includes a main body with a plurality of lighting parts, and at least one electrode disposed on the lighting parts for discharging, said electrode being shaped in a partially different dimension depending the temperature difference(Δt) in the lighting parts. The electrode compensates brightness uniformity lowering below a predetermined value due to the temperature difference(Δt).

## Description

### Technical Field

The present invention relates to a surface light source device and a backlight unit having the same, more particularly a surface light source device and a backlight unit with enhanced brightness uniformity.

### Background Art

There are various light sources for an LCD backlight, for example, a point light source such as LED (light emitting diode), a linear light source such as CCFL (cold cathode fluorescent lamp) and a surface light source device such as FFL (flat fluorescent lamp).

For a light source, brightness uniformity is very important factor for high quality display. Among the above light sources the surface light source has better brightness uniformity than others, and thus the recently developed LCD mostly uses the surface light source for a backlight.

A surface light source device has a lighting mechanism that excited electrons emitted from discharge gas in closed discharge space collide against a fluorescent layer to generate visible ray.

A surface light source device with being fitted into a display is generally perpendicularly installed, that is, substantially parallel to the direction of gravity. In this case, the heat generated from the surface light source device tends to rise up due to thermal convection, and subsequently the discharge gas in the upper part is more activated than that in the lower part. As a result, the amount of light generated from the upper part is relatively large, which leads to brightness non-uniformity in the surface light source device. The brightness uniformity lowering deteriorates the display quality of a display device using the surface light source device.

Thus, enhancing brightness uniformity of a surface light source is indispensable to improve the display quality of a display device.

### Summary of Invention

It is an object of the present invention to provide a surface light source device and a backlight unit with enhanced brightness uniformity.

It is another object of the present invention to provide a suitable electrode structure for a perpendicularly installed surface light source in order to overcome brightness non-uniformity due to any temperature difference.

The present invention provides a surface light source device comprising a main body with a plurality of lighting parts; and at least one electrode disposed on the lighting parts for discharging, said electrode being shaped in a partially different dimension depending the temperature difference(Δt) in the lighting parts.

The electrode compensates brightness uniformity lowering below a predetermined value due to the temperature difference(Δt).

The present invention also provides a backlight unit comprising the surface light source device; an upper and a lower cases holding the surface light source device; an optical member inserted between the surface light source device and the upper case; and an inverter for applying discharge voltage to surface light source device.

According to the present invention, in case that the entire brightness uniformity of a surface light source device is lowered below a desired level due to any temperature difference(Δt) in lighting parts, the electrode is shaped in a partially different dimension to compensate brightness non-uniformity. Thus, the brightness non-uniformity in the surface light source device due to local temperature difference can be overcome.

The desired level of brightness uniformity for a surface light source device may be varied according to the application. To provide high brightness uniformity, it is preferable to modify the shape of an electrode of surface light source device even for relatively small temperature difference.

The electrode can be modified to have locally increased size or thickness, or alternatively continuously or discontinuously increased size or thickness.

### Brief Description of the Drawings

The above objects and other advantages of the present invention will become more apparent by describing in detail the preferred embodiments thereof with reference to the accompanying drawings, in which:
Fig. 1 is a side view of a surface light source device according to an embodiment of the present invention.
Fig. 2 is a cross sectional view of a main body according to an embodiment of the present invention.
Fig. 3 is a cross sectional view of a main body according to another embodiment of the present invention.
Fig. 4 shows a plan view of a surface light source device with a modified electrode structure according to an embodiment of the present invention.
Fig. 5 shows a plan view of a surface light source device with a modified electrode structure according to another embodiment of the present invention.
Fig. 6 shows a plan view of a surface light source device with a modified electrode structure according to a further embodiment of the present invention.
Fig. 7 shows a plan view of a surface light source device with a modified electrode structure according to still another embodiment of the present invention.
Fig. 8 is an exploded perspective view showing a backlight unit in accordance with the present invention.

### Best Mode for Carrying Out the Invention

### Surface light source device

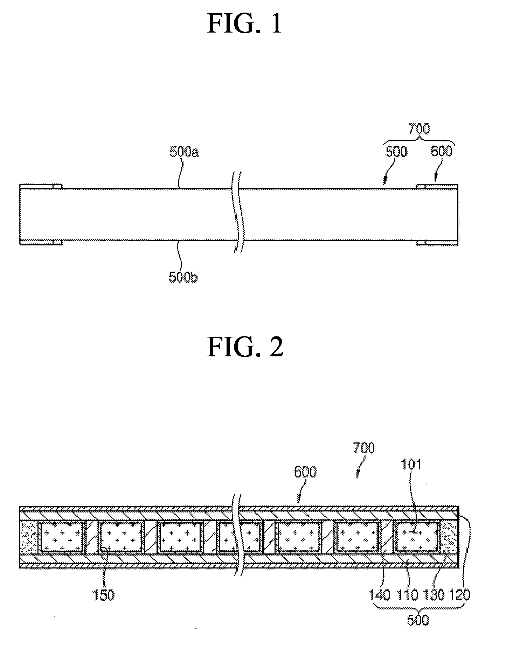

Fig. 1 shows a surface light source device in accordance with an embodiment of the present invention.

As shown therein, the surface light source device 700 includes a main body 500 and electrodes 600.

In the embodiment, the main body 500 has, for example, a hexahedral shape and includes at least partially transparent material. The main body 500 may be made of a transparent glass.

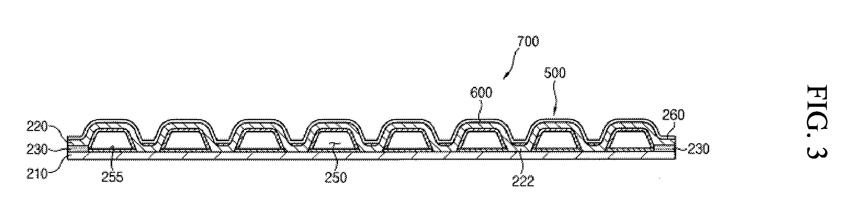

Fig. 2 is a cross sectional view of an embodiment of the main body in Fig. 1. Referring to Fig. 2, the main body 500 includes a first plate 110, a second plate 120, partition wall 140, and a sealing member (for example, a sealant) 130.

The first and second plates 110, 120 have a rectangular plate shape and face each other. In the embodiment, the first and second plates 110, 120 may be made of a transparent glass.

The sealing member 130 is inserted between the first and second plates 110, 120 and provides a closed space. Preferably, the sealing member 130 is shaped in a rectangular frame and is formed at the edge of the first and second plates 110, 120.

The partition walls 140 divides the inner space between the first and second plates 110, 120 and forms a plurality of lighting parts 101. The partition wall 140 intervenes between the first and second plates 110, 120, which are thus spaced apart with each other.

The partition walls 140 are arranged parallel to one another and may be disposed to provide a serpentine structure of lighting parts 101. Alternatively, the partition walls 140 may be arranged to isolate lighting parts 101 from each other. In this case, the partition walls 140 have at least one through-hole (not shown) to make uniform the pressure of discharge gas in the isolated lighting parts 101. The through-hole in the partition walls may be arranged in zigzag. In the present invention, the shape and arrangement of the partition walls and the trough-hole is not limited specifically, but may be variously modified.

Each lighting part 101 is provided with discharge gas in a uniform gas pressure. The discharge gas is discharged by applied voltage to generate ultraviolet ray.

The first and second plate 110, 120 has a fluorescent layer 150 therein, which is excited by the ultraviolet ray and generates visible ray. The visible ray from the fluorescent layer 150 may be emitted through the first and second plate 110, 120. In the embodiment, the first plate 110 or the second plate 120 may have a light reflection layer in order to emit the visible ray through only one of the first and second plate 110, 120.

Fig. 3 is a cross sectional view of another embodiment of the main body in Fig. 1. Referring to Fig. 3, the main body 500 includes a first plate 210 and a second plate 220.

The first plate 210 may be, for example, a glass plate with a rectangular plate shape.

The second plate 220 is disposed to face the first plate 210. Preferably, the second plate 220 is partially adhered to the first plate 210, a plurality of lighting part 250 are formed between the first plate 210 and the second plate 220.

The second plate 220 has an irregular surface with a plurality of convex parts and concave parts to form the lighting parts 250. The concave parts correspond to partition part 222 isolating neighboring lighting parts 250. The cross section of the lighting part 250 is formed, for example, in circular, triangular, trapezoid, rectangular, or polygonal shape.

A frit glass 230 is intervened between the first plate 210 and the second plate 220 to bind them strongly.

The lighting part 250 is provided with discharge gas. In the embodiment, the discharge gas includes selectively mercury, neon, xenon, or krypton. Discharge gas is discharged by the applied voltage to the lighting part 250 and generates ultraviolet ray.

The first and second plate 210, 220 has a fluorescent layer 255 therein, which is excited by the ultraviolet ray from the lighting part 250 and generates visible ray.

According to the present embodiment, whereas the surface light source device is described to have the first plate 210 with a flat surface and the second plate 220 with an irregular surface, it may have another main body with unlimited and various shape.

In the aforementioned embodiments, the surface light source device 700 may have local temperature difference. The temperature difference becomes severe when the light emitting surface of the surface light source device 700 is arranged parallel to the direction of gravity. In this case, the heat generated from the surface light source device 700 tends to rise up due to thermal convection, and subsequently the upper part and the lower part of the surface light source device 700 have different temperature.

When the surface light source device 700 has locally different temperature, the discharge gas in the surface light source device has also different temperature, and as a result the brightness of the surface light source device 700 grows non-uniform.

In the present invention, the brightness uniformity decrease in the surface light source device due to temperature difference can be overcome by modify the shape or structure of the electrode 600 depending on the temperature difference. Thus, a brightness uniformity lowering due to the temperature difference can be compensated and a desired level of brightness uniformity can be maintained.

### Compensation of brightness uniformity lowering due to temperature difference

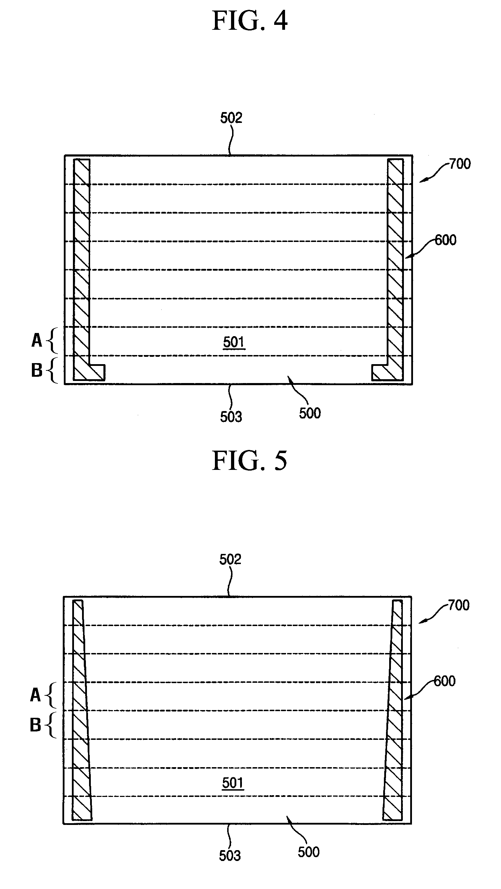

Fig. 4 shows a plan view of a surface light source device with a modified electrode structure according to an embodiment of the present invention.

Referring to Fig. 4, an electrode 600 is arranged substantially perpendicular to the direction of the length of the lighting part 501 of the main body 500. In the embodiment, the electrode 600 is disposed on a first surface 500a of the main body 500. On the contrary, the electrode 600 may be disposed on a second surface 500b of the main body 500. Alternatively, the electrode 600 may be disposed on the first surface and second surface 500a, 500b. The electrode 600 may be located both the edge of the lighting part 501. The electrode 600 is applied by voltage for discharging the gas in the lighting part 501.

In the embodiment, the dimension of the electrode 600, such as width, thickness, or length, is changed depending on the local or entire temperature difference of the surface light source device. For example, as shown in Fig. 4, the electrode 600 may be formed in an 'L' type crooked shape at the lower part of the main body 500.

The electrode 600 according to the present embodiment may be appropriate when the outer lighting part of the main body 500 has lower temperature.

Typically, since the outer lighting part of the main body 500 has relatively low temperature, its luminescent quality is deteriorated. For solving the deterioration, the edge of electrode 600 has larger dimension than the other parts. The actual dimension of the electrode 600 at the upper part and lower part of the main body 500 can be designed depending on required brightness uniformity level. For example, in case that an LCD-TV requires the brightness uniformity of a backlight over 80%, if the temperature difference between neighboring lighting parts is 3 °C or more, the local brightness lowering can be compensated by increasing partially the dimension of the electrode in the range of 10 - 30%. If the temperature difference between neighboring lighting parts is 5 °C or more, the local brightness lowering can be compensated by increasing partially the dimension of the electrode in the range of 15 - 40%. For example, if the temperature of a lighting part of an electrode with 13 mm width becomes lowered 5 °C or more, the lighting part should be preferably increased in the width of 15 - 17.5 mm.

If the temperature of the lighting part becomes lowered 10 °C or more, the lighting part should be further increased in the width of 17 - 21 mm

Referring to Fig. 4, it is shown that lighting part B has relatively large size so that brightness non-uniformity due to temperature difference between the neighboring lighting parts A and B may be compensated. Thus, the light generated from the lighting part B increases, and subsequently the surface light source device 700 has enhanced brightness uniformity over the whole surface.

Fig. 5 shows a plan view of a surface light source device with a modified electrode structure according to another embodiment of the present invention.

In the present embodiment, the dimension of the electrode 600, such as width, thickness, or length, is changed depending on the local or entire temperature difference of the surface light source device. As shown, the electrode 600 is formed in a trapezoid shape the size of which continuously increases from the upper part to the lower part of the main body 500. The electrode in accordance with the present embodiment may be appropriate when the temperature of the main body 500 of the surface light source device 700 gradually decreases from the upper part to the lower part. For example, when the light emitting surface of the main body 500 is arranged perpendicular to the bottom surface, the temperature of the main body tends to continuously increase from the lower part to the upper part. In this case, the light generated from the main body 500 gradually decreases from the upper part to the lower part, the entire temperature difference over the whole area of the main body may be severe, even though the local temperature difference between the neighboring lighting part A and B is relatively small. Thus, the brightness uniformity of the light emitted from the surface light source device 700 may extremely decrease.

To prevent the decrease, the dimension of the electrode 600 is modified to gradually increase in the direction of the lower part of the main body 500. The specific shape of the electrode 600 will be varied depending on the desired brightness uniformity.

For example, in case that the brightness uniformity over 80% is required, if the entire temperature difference of the whole light emitting parts is 3 °C or more, the entire brightness lowering can be compensated by increasing gradually the dimension of the electrode in the range of 10 ~ 30%. If the entire temperature difference is 5 °C or more, the entire brightness lowering can be compensated by increasing gradually the dimension of the electrode in the range of 15 - 40%. Such a modified electrode shape increases the entire brightness uniformity of the surface light source device 700.

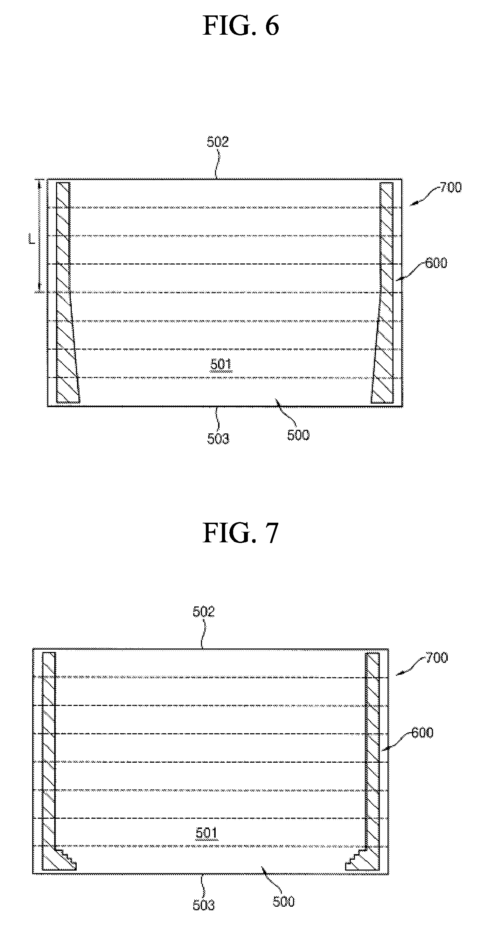

Fig. 6 shows a plan view of a surface light source device with a modified electrode structure according to a further embodiment of the present invention. In the present embodiment, the dimension of the electrode 600, such as width, thickness, or length, is changed depending on the local or entire temperature difference of the surface light source device. The electrode in accordance with the present embodiment may be appropriate when the temperature of the lower part of the main body 500 is relatively low.

In the embodiment, the dimension (for example, size) of electrode 600 is settled from the upper part 502 of the main body 500 to the middle part at a distance L, and continuously increases in the next lower part 503. In this regard, the increased part of the electrode from the upper part to lower part of the main body corresponds to the compensation of brightness non-uniformity. In the embodiment, the length L may become longer or shorter according to the light (or light intensity) from the upper part to the lower part of the main body 500. The continuous increase of electrode size in the lower part of the main body 500, where the amount of light is not enough, leads to the increase of light generation, and thus brightness uniformity of the surface light source device 700 can be enhanced.

Fig. 7 shows a plan view of a surface light source device with a modified electrode structure according to still another embodiment of the present invention. In the present embodiment, the dimension of the electrode 600, such as width, thickness, or length, is changed depending on the local or entire temperature difference of the surface light source device. The electrode in accordance with the present embodiment may be appropriate when the temperature of the lower part of the main body 500 is relatively low. In the embodiment, the dimension of electrode 600 is larger at the lower part of the main body 500 than at the upper part. The increased part of the electrode from the upper part to lower part of the main body corresponds to the compensation of brightness non-uniformity. The electrode 600 at the lower part of the main body 500 has a stepped shape (discontinuously increased), and thus the size of the electrode increases to the lower part of the main body 500. The discontinuous increase of electrode size in the lower part of the main body 500, where the amount of light is not enough, leads to the increase of light generation, and thus brightness uniformity of the surface light source device 700 can be enhanced.

### Backlight unit

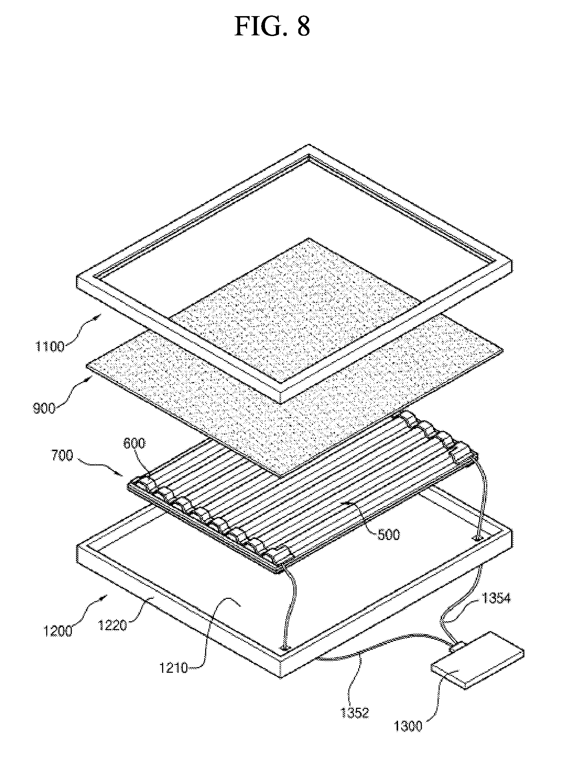

Fig. 8 is an exploded perspective view showing a backlight unit in accordance with the present invention. Referring to Fig. 8, the backlight unit includes a surface light source device 700 as shown in Fig. 3, an upper and a lower cases 1100, 1200, an optical member 900, and an inverter 1300.

Alternatively, other surface light source devices in the various embodiment as above may be included in the backlight unit.

The lower case 1200 is formed of a base 1210 and a plurality of side walls 1220 for holding the surface light source device 700. The surface light source device 700 is mounted on the inner space of the lower case 1200.

The inverter 1300 is disposed at rear side of the lower case 1200, and generates discharge voltage for driving the surface light source device. The discharge voltage generated from the inverter 1300 is applied via a first and a second electric wires 1352, 1354 to the electrode 600 of the surface light source device 700.

The optical member 900 may include a diffusion plate (not shown) for uniformly diffusing the emitted light and a prism sheet (not shown) for collimating the diffused light.

The upper case 1100 joined with the lower case 1200 supports the surface light source device 700 and the optical member 900 to prevent the surface light source device from leaving the lower case 1200. An LCD panel (not shown) may be disposed on the upper case.

The present invention has been described above with reference to the aforementioned embodiments. It is evident, however, that many alternative modifications and variations will be apparent to those skilled in the art in light of the foregoing description. Accordingly, the present invention embraces all such alternative modifications and variations as fall within the spirit and scope of the appended claims.

## Claims

1. A surface light source device comprising:
a main body with a plurality of lighting parts; and
at least one electrode disposed on the lighting parts for discharging, said electrode being shaped in a partially different dimension depending the temperature difference(Δt) in the lighting parts,
wherein the electrode compensates brightness uniformity lowering below a predetermined value due to the temperature difference(Δt).

2. The surface light source device of claim 1, wherein the main body includes a first plate, a second plate facing on the first plate, partition walls between the first and second plates for forming the plurality of lighting parts, and a sealing member inserted in the edge between the first and second plates and defining inner space of the main body.

3. The surface light source device of claim 1, wherein the main body includes a first plate, and a second plate with partition parts adhered to the first plate.

4. The surface light source device of claim 1, wherein a pair of electrodes is disposed on a surface of the main body, said electrodes being spaced apart and facing each other.

5. The surface light source device of claim 1, wherein a pair of electrodes is disposed on a first surface and a second surface facing the first surface of the main body.

6. The surface light source device of claim 1, when the temperature difference between neighboring lighting parts or in the entire lighting parts is over 5 °C, the electrode has a partially increased dimension in the range of 15% - 40%.

7. The surface light source device of claim 6, when the temperature difference between neighboring lighting parts or in the entire lighting parts is over 3 °C, the electrode has a partially increased dimension in the range of 10% ~ 30%.

8. The surface light source device of claim 1, wherein the electrode has a first part and a second part larger than the first part.

9. The surface light source device of claim 8, wherein the dimension of the second part is continuously increased from the boundary between the first part and the second part.

10. The surface light source device of claim 8, wherein the dimension of the second part is discontinuously increased from the boundary between the first part and the second part.

11. The surface light source device of claim 10, wherein the second part has a stepped shape.

12. A backlight unit comprising:
a surface light source device including a main body with a plurality of lighting parts, and at least one electrode disposed on the lighting parts for discharging, said electrode being shaped in a partially different dimension depending the temperature difference(Δt) in the lighting parts, wherein the electrode compensates brightness uniformity lowering below a predetermined value due to the temperature difference(Δt);
an upper and a lower cases holding the surface light source device;
an optical member inserted between the surface light source device and the upper case; and
an inverter for applying discharge voltage to surface light source device.

13. The backlight unit of claim 12, when the temperature difference between neighboring lighting parts or in the entire lighting parts is over 5 °C, the electrode has a partially increased dimension in the range of 15% - 40%.

14. The backlight unit of claim 13, when the temperature difference between neighboring lighting parts or in the entire lighting parts is over 3 °C, the electrode has a partially increased dimension in the range of 10% ~ 30%.

15. The backlight unit of claim 12, wherein the electrode has a first part and a second part larger than the first part.

16. The backlight unit of claim 15, wherein the dimension of the second part is continuously increased from the boundary between the first part and the second part.

17. The backlight unit of claim 15, wherein the dimension of the second part is continuously increased from the boundary between the first part and the second part.
